(19) Europäisches Patentamt
European Patent Office
Office européen des brevets

(11) EP 2 764 356 B1

(12) **EUROPÄISCHE PATENTSCHRIFT**

(45) Veröffentlichungstag und Bekanntmachung des Hinweises auf die Patenterteilung:
**28.06.2017 Patentblatt 2017/26**

(51) Int Cl.:
***G01N 29/06*** *(2006.01)*

(21) Anmeldenummer: **12819067.5**

(86) Internationale Anmeldenummer:
**PCT/EP2012/077013**

(22) Anmeldetag: **28.12.2012**

(87) Internationale Veröffentlichungsnummer:
**WO 2013/104525 (18.07.2013 Gazette 2013/29)**

(54) **VERFAHREN UND VORRICHTUNG ZUR DETEKTION VON DEFEKTEN INNERHALB EINES PRÜFOBJEKTES**

METHOD AND DEVICE FOR DETECTING DEFECTS WITHIN A TEST OBJECT

PROCÉDÉ ET DISPOSITIF DE DÉTECTION DE DÉFAUTS À L'INTÉRIEUR D'UN OBJET À CONTRÔLER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.01.2012 DE 102012200409**

(43) Veröffentlichungstag der Anmeldung:
**13.08.2014 Patentblatt 2014/33**

(73) Patentinhaber: **Siemens Aktiengesellschaft 80333 München (DE)**

(72) Erfinder:
• **HEINRICH, Werner**
  **16727 Oberkrämer OT Bärenklau (DE)**
• **MOOSHOFER, Hubert**
  **80538 München (DE)**

(56) Entgegenhaltungen:
**EP-A1- 2 051 070     EP-A1- 2 120 045
WO-A1-2008/138684     US-A- 5 549 002**

**Beschreibung**

Die Erfindung betrifft ein Verfahren und eine Vorrichtung zur Detektion von mindestens einem Defekt innerhalb eines Prüfobjektes und insbesondere eine orientierungsunabhängige Defektdetektion mittels Ultraschall.

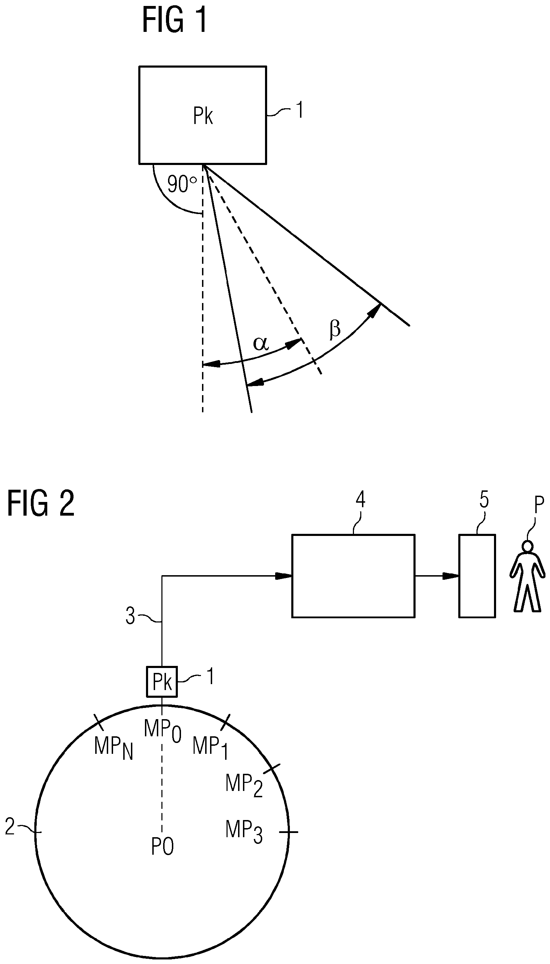

Prüfobjekte, beispielsweise maschinelle Bauteile, werden nach ihrer Herstellung dahingehend geprüft, ob sie Defekte, beispielsweise kleine Hohlräume oder Risse, aufweisen. Dabei erfolgt die Prüfung vorzugsweise mittels Ultraschall. Bei der Ultraschallprüfung ist das sogenannte SAFT (Synthetic Aperture Focussing Technique)-Verfahren bekannt, um kleine Defekte innerhalb des Prüfobjektes zu detektieren und von anderen Defekten abzugrenzen. Das SAFT-Verfahren dient zur Erhöhung der räumlichen Auflösung, um genaue Aussagen über den Ort und die Form von reflektierenden Defekten innerhalb des Prüfobjektes zu erhalten. Um spiegelnde Defekte innerhalb des Prüfobjektes sicher zu detektieren, werden bei dem SAFT-Verfahren Prüfköpfe mit einer möglichst großen Öffnungswinkel verwendet. Darüber hinaus entfaltet das SAFT-Verfahren die größte Wirkung bei einem großen Öffnungswinkel. Fig. 1 zeigt schematisch einen Prüfkopf PK, der Schallsignale mit einem Einschallwinkel $\alpha$ in das Prüfobjekt einschallt, und der einen Öffnungswinkel $\beta$ aufweist. Der große Öffnungswinkel $\beta$ bedeutet, dass der Prüfkopf PK einen kleinen Durchmesser aufweist und idealerweise nahezu punktförmig ist. Der Öffnungswinkel $\beta$ des Schallbündels ist dadurch begrenzt, dass ausreichend viel Energie in das zu prüfende Bauteil bzw. das Prüfobjekt eingebracht werden muss, insbesondere bei langen Schallwegen. Je größer der Öffnungswinkel $\beta$, desto kleiner ist - aufgrund der kleineren Wandlerfläche - die eingebrachte Schallenergie und desto größer ist die Energieverteilung des eingeschallten Ultraschallsignales und desto weniger wird von Defekten als Echoschallsignal zurückreflektiert, sodass das Signalrauschverhältnis SNR sinkt.

In der EP 2 120 045 A1 sind eine Vorrichtung und ein Verfahren zur Erzeugung eines Ultraschallbildes mittels eines Gruppenstrahlers beschrieben. Zum Erzeugen des Ultraschallbildes werden mehrere Messreihen durchgeführt, wobei jede Messreihe einem Messort auf einer Probe zugeordnet wird.

In der DE 10 2008 023 862 A1 wird eine Vorrichtung und ein Verfahren zur Erzeugung eines Ultraschallbildes beschrieben. Dabei werden Messreihen, die durch einen Gruppenstrahler aufgenommen werden, mittels eines SAFT-Algorithmus ausgewertet. Bei diesem herkömmlichen Verfahren wird neben dem notwendigen Einsatz eines Gruppenstrahlers vorausgesetzt, dass mehrere zu einer Messreihe gehörende Einschallrichtungen bzw. Einschallwinkel von derselben Einschallposition bzw. Messposition gemessen werden können.

Bei der DE 10 2008 023 862 A1 wird ein Gruppenstrahlerprüfkopf auf verschiedene Orte bzw. Positionen auf einer Oberfläche eines Prüfobjektes aufgesetzt, sodass eine jeweilige Messreihe einem bestimmten Messort auf dem Prüfobjekt zugeordnet ist. Anschließend erfolgt an jedem der Messorte ein Einschallen mit unterschiedlichen Einschallwinkeln $\alpha$. Für jeden Einschallwinkel wird ein Bild generiert.

Das in der DE 10 2008 023 862 A1 beschriebene Verfahren weist jedoch einige Nachteile auf. Bei diesem herkömmlichen Verfahren ist es nicht möglich, mit einem Einzelschwingerprüfkopf zu arbeiten, welcher einen festen Einschallwinkel aufweist.

Bei bestehenden Prüfanlagen werden jedoch oftmals Einzelschwingerprüfköpfe mit festem Einschallwinkel eingesetzt. Weiterhin ist das herkömmliche Verfahren auf den Einsatz von Gruppenstrahlern und auf die Durchführung von Messungen in denselben Positionen beschränkt. Weiterhin erlaubt dieses herkömmliche Verfahren nicht eine kontinuierliche Bewegung der Ultraschallprüfköpfe während der Prüfung, d.h. die Ultraschallprüfköpfe können nicht gleichmäßig über das Bauteil bzw. das Prüfobjekt bewegt werden, sodass ein örtlicher Versatz zwischen mehreren Einschallungen auftritt.

Es ist daher eine Aufgabe der vorliegenden Erfindung, ein Verfahren und eine Vorrichtung zur Detektion von mindestens einem Defekt innerhalb eines Prüfobjektes zu schaffen, das die oben genannten Nachteile vermeidet und dennoch ein Detektionssignal mit einem hohen Signalrauschverhältnis liefert.

Diese Aufgabe wird erfindungsgemäß durch ein Verfahren mit dem in Patentanspruch 1 angegebenen Merkmalen gelöst.

Die Erfindung schafft demnach ein Verfahren zur Detektion von mindestens einem Defekt innerhalb eines Prüfobjektes mit den Schritten:

Ermitteln mehrerer Messdatensätze des Prüfobjektes 2, wobei zur Ermittlung eines Messdatensatzes jeweils ein Ultraschallsignal an verschiedenen Messpunkten in das Prüfobjekt mit einem Einschallwinkel eingeschallt wird, welcher zur Ermittlung der Messdatensätze für jeden Messdatensatz verändert wird;
Durchführen einer SAFT (Synthetic Aperture Focussing Technique)-Auswertung für jeden ermittelten Messdatensatz unter Verwendung eines gemeinsamen Rekonstruktionsgitters RG innerhalb des Prüfobjektes zur Berechnung eines SAFT-Auswertungsergebnisses für jeden Messdatensatz; und Überlagern der berechneten SAFT-Auswertungsergebnisse zur Berechnung eines orientierungsunabhängigen Defektanzeigewertes für jeden Rekonstruktionspunkt des Rekonstruktionsgitters.

Das erfindungsgemäße Verfahren bietet den Vorteil, dass es ermöglicht, den Winkelbereich für das SAFT-Auswertungsverfahren zu vergrößern, ohne dabei auf einen Einsatz von Gruppenstrahlern und/oder auf die Durchführung von Messungen an denselben Messpositionen beschränkt zu sein.

Bei einer möglichen Ausführungsform ist die Anzahl der Messpunkte nicht bei allen Messdatensätzen gleich.

Bei einer möglichen Ausführungsform des erfindungsgemäßen Verfahrens werden die berechneten SAFT-Auswertungsergebnisse der ermittelten Messdatensätze zur Nivellierung des Amplitudenniveaus vor der Überlagerung der SAFT-Auswertungsergebnisse gewichtet.

Bei einer möglichen Ausführungsform des erfindungsgemäßen Verfahrens werden die überlagerten SAFT-Auswertungsergebnisse gleichgerichtet und durch Tiefpassfilterungen geglättet.

Bei einer weiteren möglichen Ausführungsform des erfindungsgemäßen Verfahrens liegen die Messpositionen in einem Messraster auf der Oberfläche des Prüfobjektes.

Bei einer weiteren möglichen Ausführungsform des erfindungsgemäßen Verfahrens werden vor dem Ermitteln der Messdatensätze die Messpositionen mittels eines Justierreflektors anhand eines reflektierten Echosignals des Justierreflektors justiert.

Bei einer weiteren möglichen Ausführungsform des erfindungsgemäßen Verfahrens wird zur Ermittlung eines Messdatensatzes des Prüfobjektes ein Ultraschallsignal mittels eines Einzelschwinger-Prüfkopfes oder mittels eines Gruppenstrahlers an verschiedenen Messpunkten in das Prüfobjekt mit dem jeweils für die Ermittlung des Messdatensatzes eingestellten Einschallwinkel eingeschallt.

Es können dabei sowohl Einzelschwinger-Prüfköpfe mit Vorsatzkeil (zur Einstellung des Einschallwinkels) verwendet werden, als auch Einzelschwinger-Winkelprüfköpfe, die für einen bestimmten Einschallwinkel konstruiert sind.

Bei einer möglichen Ausführungsform des erfindungsgemäßen Verfahrens werden die für die verschiedenen Messpunkte von dem Prüfobjekt reflektierten analogen Echo-Ultraschallsignale verstärkt und anschließend zu Messpunkten zugeordneten Echosignalen digitalisiert, welche den Messdatensatz des Prüfobjektes bilden.

Bei einer möglichen Ausführungsform des erfindungsgemäßen Verfahrens wird der Prüfkopf oder der Gruppenstrahler zum Einschallen des Ultraschallsignales und zum Erfassen des Echo-Ultraschallsignales kontinuierlich über die Oberfläche des Prüfobjektes bewegt.

Bei einer möglichen Ausführungsform des erfindungsgemäßen Verfahrens werden die für die verschiedenen Einschallwinkel berechneten SAFT-Auswertungsergebnisse der verschiedenen Messdatensätze separat zu dem jeweiligen Einschallwinkel zugehörig abgespeichert und für die Überlagerung anhand des Einschallwinkels selektiert.

Bei einer möglichen Ausführungsform des erfindungsgemäßen Verfahrens wird das Ultraschallsignal als Longitudinalwelle und/oder Transversalwelle in das Prüfobjekt eingeschallt.

Bei einer weiteren möglichen Ausführungsform des erfindungsgemäßen Verfahrens werden die berechneten Defektanzeigewerte des Rekonstruktionsgitters in Schnittansichten zweidimensional oder dreidimensional auf einer Anzeige einem Prüfer angezeigt.

Bei einer weiteren möglichen Ausführungsform des erfindungsgemäßen Verfahrens werden die berechneten Defektanzeigewerte des untersuchten Prüfobjektes jeweils mit Sollwerten eines gespeicherten Modells des zu untersuchenden Prüfobjektes zur Berechnung von Differenzwerten verglichen, die bei Überschreiten von vorgegebenen Toleranzschwellenwerten einen Defekt des Prüfobjektes angeben.

Bei einer weiteren möglichen Ausführungsform des erfindungsgemäßen Verfahrens wird ein als defekt erkanntes Prüfobjekt automatisch aussortiert.

Die Erfindung schafft ferner eine Vorrichtung zur Detektion von mindestens einem Defekt innerhalb eines Prüfobjektes mit den in Patentanspruch 13 angegebenen Merkmalen.

Bei einer möglichen Ausführungsform der erfindungsgemäßen Vorrichtung werden durch die Auswerteeinheit die berechneten SAFT-Auswertungsergebnisse der ermittelten Messdatensätze zur Nivellierung des Amplitudenniveaus vor der Überlagerung der SAFT-Auswertungsergebnisse gewichtet.

Im Folgenden werden mögliche Ausführungsformen der erfindungsgemäßen Vorrichtung und des erfindungsgemäßen Verfahrens zur Detektion von mindestens einem Defekt innerhalb eines Prüfobjektes unter Bezugnahme auf die beiliegenden Figuren näher erläutert.

Es zeigen:

Fig. 1 ein Diagramm zur Darstellung eines Einschallwinkels und eines Öffnungswinkels bei einem Ultraschallprüfkopf, wie er bei dem erfindungsgemäßen Verfahren und bei der erfindungsgemäßen Vorrichtung eingesetzt werden kann;

Fig. 2 ein Diagramm zur Erläuterung der Funktionsweise des erfindungsgemäßen Verfahrens und der erfindungsgemäßen Vorrichtung zur Detektion von Defekten innerhalb eines Prüfobjektes;

Fig. 3 ein Diagramm zur Darstellung eines bei dem erfindungsgemäßen Verfahren verwendeten Rekonstruktionsgitters;

Fig. 4 ein Blockschaltbild zur Darstellung eines Ausführungsbeispiels der erfindungsgemäßen Vorrichtung zur Detektion von Defekten innerhalb eines Prüfobjektes;

Fig. 5 ein Ablaufdiagramm zur Darstellung eines Ausführungsbeispiels des erfindungsgemäßen Verfahrens zur Detektion von Defekten innerhalb eines Prüfobjektes;

Fig. 6 eine Tabelle zur Erläuterung eines Ausführungsbeispiels des erfindungsgemäßen Verfahrens zur Detektion von Defekten innerhalb eines Prüfobjektes.

Fig. 1 zeigt schematisch einen Prüfkopf bzw. Ultraschallprüfkopf 1, der bei dem erfindungsgemäßen Verfahren und bei der erfindungsgemäßen Vorrichtung eingesetzt werden kann. Der Ultraschallprüfkopf 1 weist einen Einschallwinkel α zum Einschallen von Ultraschallsignalen in ein Prüfobjekt 2 auf, wobei das Ultraschallsignal in einem Öffnungswinkel β eingeschallt wird. Der Einschallwinkel α eines Prüfkopfes 1 kann beispielsweise mithilfe von Keilen, die zwischen dem Prüfkopf 1 und dem Prüfobjekt 2 eingeklemmt werden, verändert werden. Ferner kann der Einschallwinkel durch zeitversetzte Ansteuerung des Prüfkopfes 1 verändert werden, wenn es sich bei dem Prüfkopf 1 um einen Gruppenstrahler handelt.

Fig. 2 zeigt schematisch ein Ausführungsbeispiel der erfindungsgemäßen Vorrichtung zur Detektion von mindestens einem Defekt innerhalb eines Prüfobjektes 2. In dem dargestellten Beispiel ist das Prüfobjekt 2 zylinderförmig bzw. rotationssymmetrisch. Der Prüfkopf 1 kann in seiner Lage relativ zu dem Prüfobjekt 2 verändert werden. Dabei ist es einerseits möglich, dass der Prüfkopf 1 an der Oberfläche des Prüfobjektes 2 entlang bewegt wird. Alternativ kann auch das Prüfobjekt 2 relativ zu dem Prüfkopf 1 bewegt werden, beispielsweise indem das in Fig. 2 dargestellte rotationssymmetrische Prüfobjekt 2 um eine Achse rotiert bzw. gedreht wird. Auf diese Weise gelangt der Prüfkopf 1 zu verschiedenen Messpunkten MP, wie in Fig. 2 dargestellt. Der Prüfkopf 1 dient zum Einschallen eines Ultraschallsignales an den verschiedenen Messpunkten MP in das Prüfobjekt 2 mit einem Einschallwinkel α zur Ermittlung mehrerer Messdatensätze MDS. Dabei wird zur Ermittlung eines Messdatensatzes MDS jeweils das Ultraschallsignal und das Prüfobjekt 2 mit einem bestimmten zugehörigen Einschallwinkel α in das Prüfobjekt 2 eingeschallt. Der Einschallwinkel α wird zur Ermittlung verschiedener Messdatensätze MDS für jeden Messdatensatz MDS verändert. Die aufgenommenen Zeitsignale, werden über eine Signalleitung 3 zu einer Auswerteeinheit 4 übertragen, an der eine Anzeigeeinheit 5 für einen Prüfer P angeschlossen ist.

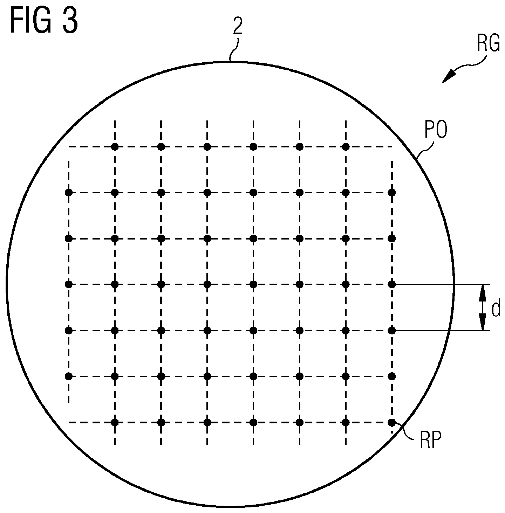

Die Auswerteeinheit 4 führt für jeden ermittelten Messdatensatz MDS eine SAFT (Synthetic Aperture Focussing Technique)-Auswertung unter Verwendung eines gemeinsamen Rekonstruktionsgitters RG innerhalb des Prüfobjektes 2 zur Berechnung eines SAFT-Auswertungsergebnisses für jeden Messdatensatz MDS durch. Ein Beispiel für ein verwendetes Rekonstruktionsgitter RG ist in Fig. 3 dargestellt. Die Auswerteeinheit 4 überlagert die berechneten SAFT-Auswertungsergebnisse zur Berechnung eines orientierungsunabhängigen Defektanzeigewertes für jeden Punkt RP des gemeinsamen Rekonstruktionsgitters RG wie es in Fig. 3 dargestellt ist. Das in Fig. 3 dargestellte Rekonstruktionsgitter RG weist eine Vielzahl von Rekonstruktionspunkten RP auf, die in einem Gitter angeordnet sind. Das Rekonstruktionsgitter RG ist vorzugsweise dreidimensional. Das RG kann auch zweidimensional sein, wenn man nur eine Schnittebene des Bauteils misst und rekonstruiert und die Rekonstruktionspunkte RP mit kartesischen Koordinatenpunkten (x, y, z) oder anderen Koordinaten, beispielsweise Zylinder - oder Polarkoordinaten, angeben kann. Das Rekonstruktionsgitter RG kann auch zweidimensional sein, insbesondere wenn nur eine Schnittebene des Bauteils bzw. Prüfobjektes gemessen und rekonstruiert wird. Die Rekonstruktionspunkte RP weisen einen bestimmten Abstand d zueinander auf, wie in Fig. 3 dargestellt. Das Rekonstruktionsgitter RG kann auch unregelmäßig sein, z.B. kann ein Bereich mit kleinerem Raster enthalten sein, der detaillierter rekonstruiert wird. Das Rekonstruktionsgitter RG ist ein zwei- oder dreidimensionales virtuelles Gitter, das sich innerhalb des Prüfobjektes 2 erstreckt. Je kleiner der Abstand d zwischen den Rekonstruktionspunkten RP des Rekonstruktionsgitters RG ist, desto höher ist die gewonnene Auflösung, wobei allerdings die Rechenzeit zur Berechnung des Auswertungsergebnisses steigt. Der Abstand d zwischen den Rekonstruktionspunkten RP kann beispielsweise in einem Bereich von 0,5 bis 1 mm liegen.

Zur Ermittlung eines Messdatensatzes MDS wird jeweils ein Ultraschallsignal durch den in Fig. 2 dargestellten Prüfkopf 1 an verschiedenen Messpunkten MP in das Prüfobjekt 2 mit einem bestimmten Einschallwinkel α eingeschallt, welcher zur Ermittlung der Messdatensätze MDS für jeden Messdatensatz MDS verändert wird. Anschließend wird eine SAFT-Auswertung mittels der Auswerteeinheit 4 für jeden ermittelten Messdatensatz MDS unter Verwendung des gemeinsamen Rekonstruktionsgitters RG innerhalb des Prüfobjektes 2 zur Berechnung eines SAFT-Auswertungsergebnisses für jeden Messdatensatz MDS durchgeführt. Die berechneten SAFT-Auswertungsergebnisse werden zur Berechnung eines orientierungsunabhängigen Defektanzeigewertes für jeden Rekonstruktionspunkt RP des Rekonstruktionsgitters RG überlagert. Bei einer möglichen Ausführungsform können durch die Auswerteeinheit 4 die berechneten SAFT-Auswertungsergebnisse der ermittelten Messdatensätze MDS zur Nivellierung des Amplitudenniveaus vor der Überlagerung der SAFT-Auswertungsergebnisse gewichtet werden. Die überlagerten SAFT-Auswertungsergebnisse können bei einer möglichen Ausführungsform durch die Auswerteeinheit 4 ferner gleichgerichtet und durch Tiefpassfilterung geglättet werden.

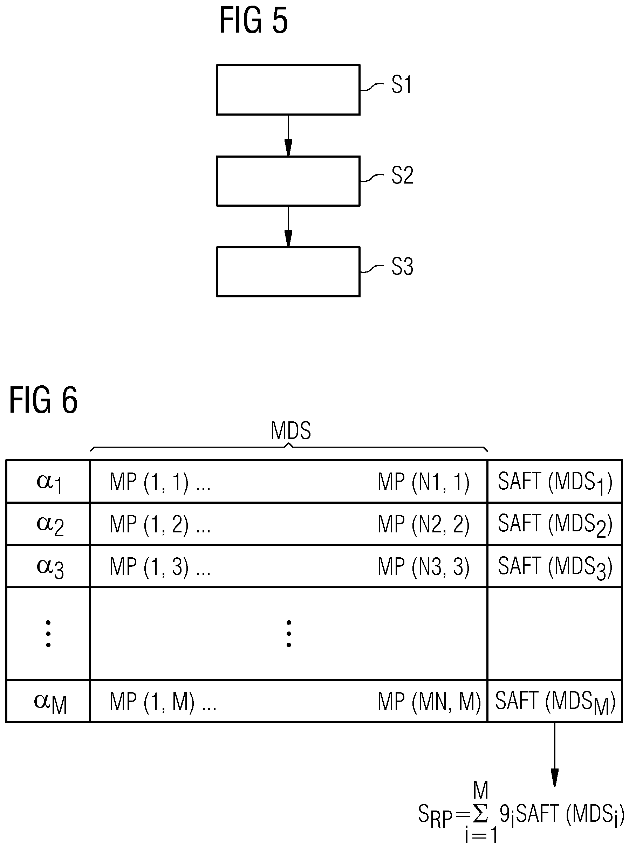

Wie in Fig. 2 dargestellt, liegen die Messpositionen MP beispielsweise in einem Messraster auf der Oberfläche des Prüfobjektes 2. Beispielsweise ist der Abstand zwischen den Messpunkten MP1 innerhalb des Messrasters konstant, der Abstand zwischen den Messpunkten MP kann aber auch variieren. Beispielsweise kann der Abstand zwischen zwei Messpunkten MPi auf der Oberfläche des Prüfobjektes 2,5 mm betragen. Bei dem in Fig. 2 dargestellten Beispiel ist das Prüfobjekt 2 zylinderförmig, wobei es sich bei dem Prüfobjekt 2 beispielsweise um eine Turbinenscheibe handeln kann. Bei Aufnahme eines Messdatensatzes MDS bewegt sich der Prüfkopf 1 zum Einschallen des Ultraschallsignales in das Prüfobjekt 2 und zum Erfassen der zurückreflektierten Echo-Ultraschallsignale kontinuierlich relativ zu der Oberfläche des Prüfobjektes 2. Zur Ermittlung eines Messdatensatzes MDS in das Prüfobjekt 2 wird das Ultraschallsignal mittels des Prüfkopfes 1 an den verschiedenen Messpunkten MP in das Prüfobjekt 2 mit dem jeweils für die Ermittlung des Messdatensatzes MDS jeweils eingestellten konstanten Einschallwinkel $\alpha$ eingeschallt. Beispielsweise umfasst ein Messdatensatz MDS N Messdaten die an N Messpositionen MP erfasst werden. Dies ist schematisch in der Tabelle in Fig. 6 dargestellt. Dabei wird an N1 Messpositionen MP ein erster Messdatensatz MDS1 für einen Einschallwinkel $\alpha1$ aufgenommen. Anschließend wird der Einschallwinkel $\alpha$ auf einen neuen Einschallwinkel $\alpha2$ eingestellt und ein weiterer Messdatensatz MDS2 erfasst. Auf diese Weise können beispielsweise M Messdatensätze für M verschiedene Einschallwinkel $\alpha$ erzeugt werden. Die Abstände zwischen den Messpunkten MP können konstant sein, aber auch variieren. Zudem kann die Anzahl der Messpunkte innerhalb eines Messdatensatzes MDS unterschiedlich sein. Die verschiedenen Messdatensätze MDS können unabhängig voneinander durch die Auswerteeinheit 4 mithilfe eines SAFT-Algorithmus ausgewertet werden, wobei die Auswertung bei allen Messdatensätzen MDS an denselben Gitterpunkten des in Fig. 3 dargestellten Referenzgitters RG erfolgt. Sofern die genauen Positionen der Messpunkte bzw. der Messdaten nicht bekannt sind, kann bei einer möglichen Ausführungsform eine Deckungsgleichheit der Positionen des Rekonstruktionsgitters RG mittels Feinjustierung der Position der Messdaten sichergestellt werden, beispielsweise anhand des Echosignales eines Justierreflektors, welches in allen Messdatensätzen MDS enthalten ist. Dabei werden vor dem Ermitteln der Messdatensätze MDS die Messpositionen MP mittels des Justierreflektors anhand eines reflektierten Echosignales des Justierreflektors genau justiert. Die Justierung erfolgt dabei vorzugsweise einmalig vor der Ermittlung der Messdatensätze, um einen Positionsversatz von Prüfköpfen 1 zu ermitteln. Der Justierreflektor bildet somit ein Hilfsmittel, um Messpositionen MP genau zu ermitteln. Der Justierkörper bzw. Justierreflektor kann beispielsweise eine in dem Prüfobjekt 2 an einer bestimmten Position vorhandene Bohrung sein. Der Justierreflektor wird somit durch eine definierte Inhomogenität innerhalb des Prüfobjektes 2 gebildet. Durch die Auswerteeinheit 4 werden an jedem Gitterpunkt RP des Rekonstruktionsgitters RG die zu den verschiedenen Messdatensätzen MDS gehörenden SAFT-Auswertungsergebnisse phasenrichtig addiert.

Dabei kann eine Gewichtung der SAFT-Auswertungsergebnisse erfolgen, um unterschiedliche Amplitudenniveaus der Messdatensätze MDS auszugleichen. Weiterhin kann optional bei Ermittlung der SAFT-Auswertungsergebnisse der einzelnen Messdatensätze MDS das Schallfeld mitberücksichtigt werden. Weiterhin erfolgt optional eine Gleichrichtung bzw. Glättung nach der Überlagerung bzw. Fusion der einzelnen SAFT-Auswertungsergebnisse.

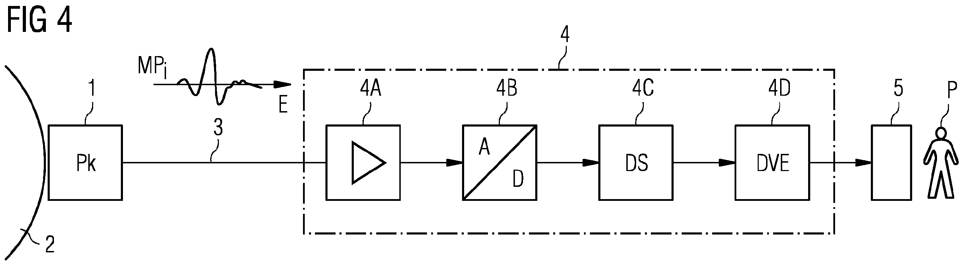

Fig. 4 zeigt ein Ausführungsbeispiel der erfindungsgemäßen Vorrichtung zur Ermittlung von Defekten innerhalb eines Prüfobjektes 2. Zur Ermittlung eines Messdatensatzes MDS des Prüfobjektes 2 wird mittels des Prüfkopfes 1 ein Ultraschallsignal bei den Messpunkten MP in das Prüfobjekt 2 mit dem jeweils für die Ermittlung des Messdatensatzes MDS aktuell eingestellten Einschallwinkel $\alpha$ eingeschallt. Die an den verschiedenen Messpunkte MP von dem Prüfobjekt 2 zurückreflektierten analogen Echo-Ultraschallsignale werden durch den Prüfkopf 1 erfasst und als Zeitsignal für den jeweiligen Messpunkt MPi über die Signalleitung 3 an die Auswerteeinheit 4 übertragen, wie in Fig. 4 dargestellt. Das empfangene analoge Echo-Ultraschallsignal für den jeweiligen Messpunkt MPi wird durch einen Signalverstärker 4A zunächst verstärkt und durch einen Analog-Digital-Wandler 4B der Auswerteeinheit 4 zu Messpunkt-Echodaten digitalisiert, welche den Messdatensatz MDS des Prüfobjektes 2 bilden. Der Messdatensatz MDS wird anschließend in einem Datenspeicher 4C der Auswerteeinheit 4 zur weiteren Auswertung gespeichert. Beispielsweise weist der Datenspeicher 4C den in der Tabelle gemäß Fig. 6 dargestellten Dateninhalt auf. Die in dem Datenspeicher 4C zwischengespeicherten Messdatensätze MDS werden durch eine Datenverarbeitungseinheit 4D, beispielsweise ein Prozessor, ausgewertet und verarbeitet. Der Prozessor 4D führt für jeden Messdatensatz MDS unter Verwendung des gemeinsamen Rekonstruktionsgitters RG innerhalb des Prüfobjektes 2 eine SAFT-Auswertung zur Berechnung eines SAFT-Auswertungsergebnisses für den jeweiligen Messdatensatz MDS durch, wie in Fig. 6 angedeutet. Anschließend werden die berechneten SAFT-Auswertungsergebnisse SAFT(MDS) zur Berechnung eines orientierungsunabhängigen Defektanzeigewertes $S_{RP}$ für jeden Rekonstruktionspunkt RP des Rekonstruktionsgitters RG überlagert, sodass ein Defektanzeigewert $S_{RP}$ für jeden Rekonstruktionspunkt RP berechnet wird, wie in Fig. 6 angedeutet. Dabei werden die berechneten SAFT-Auswertungsergebnisse der ermittelten Messdatensätze MDS vorzugsweise zur Nivellierung des Amplitudenniveaus bei der Überlagerung der SAFT-Auswertungsergebnisse mit Gewichtungsfaktoren $G_i$ gewichtet, wie in Fig. 6 dargestellt:

$$S_{RP} = \sum_{i=1}^{M} gi \, SAFT(MDS_i)$$

wobei $S_{RP}$ der orientierungsunabhängige Defektanzeigewert für einen Rekonstruktionspunkt RP des Rekonstruktionsgitters RG ist, gi ein einstellbarer Gewichtungsfaktor ist und SAFT(MDS) ein SAFT-Auswertungsergebnis für einen Messdatensatz MDS darstellt.

Fig. 5 zeigt ein Ablaufdiagramm zur Darstellung eines Ausführungsbeispiels des erfindungsgemäßen Verfahrens zur Detektion von mindestens einem Defekt innerhalb eines Prüfobjektes 2.

In einem Schritt S1 werden zunächst mehrere Messdatensätze MDS des Prüfobjektes 2 ermittelt, wobei zur Ermittlung des Messdatensatzes MDS jeweils ein Ultraschallsignal von einem Prüfkopf 1 an verschiedenen Messpunkten MP in das Prüfobjekt 2 mit einem Einschallwinkel $\alpha$ eingeschallt wird, wobei der Einschallwinkel $\alpha$ zur Ermittlung der Messdatensätze MDS für jeden Messdatensatz MDS verändert wird.

In einem weiteren Schritt S2 wird eine SAFT-Auswertung für jeden ermittelten Messdatensatz MDS unter Verwendung eines gemeinsamen Rekonstruktionsgitters RG innerhalb des Prüfobjektes 2 zur Berechnung eines SAFT-Auswertungsergebnisses SAFT(MDS) für jeden Messdatensatz MDS durchgeführt.

Anschließend werden in einem Schritt S3 die berechneten SAFT-Auswertungsergebnisse zur Berechnung des orientierungsunabhängigen Defektanzeigewertes $S_{RP}$ für jeden Rekonstruktionspunkt RP des Rekonstruktionsgitters RG überlagert. In Schritt S3 kann ferner eine Gewichtung der SAFT-Auswertungsergebnisse bei der Überlagerung erfolgen. In einem weiteren (nicht dargestellten) Schritt können die überlagerten SAFT-Auswertungsergebnisse gleichgerichtet und/oder durch Tiefpassfilterung geglättet werden.

Bei dem erfindungsgemäßen Verfahren können sowohl Einzelschwingerprüfköpfe als auch Gruppenstrahler bzw. Phased-Array-Prüfköpfe eingesetzt werden. Mit verschiedenen Prüfköpfen bzw. mit einem Phased-Array-Prüfkopf kann das Prüfobjekt 2 mit unterschiedlichen Einschallwinkeln $\alpha$ inspiziert werden, sodass hierdurch mehrere Messdatensätze MDS generiert werden, die aus den gemessenen Zeitsignalen und der zugehörigen Positionsinformation bestehen. Im erfindungsgemäßen Verfahren kann sich das Scanraster für die Messdatensätze unterscheiden, sodass, soweit zweckmäßig, auch mehrere Ultraschallscanner bzw. Ultraschallprüfköpfe gleichzeitig eingesetzt werden können. Das in Fig. 5 dargestellte Verfahren kann beispielsweise als Applikationsprogramm auf einer Datenverarbeitungseinheit der Auswerteeinheit 4 ausgeführt werden.

Bei dem erfindungsgemäßen Verfahren kommen die Vorteile der SAFT-Auswertung besser zum Tragen, da mögliche innerhalb des Prüfobjektes 2 bestehende Defekte durch mehrere Messungen unter einem großem Winkelbereich eingeschallt werden können. Das erfindungsgemäße Verfahren führt zu einer besseren lateralen Abgrenzung von Defekten und deren Größenbestimmung sowie zu höheren Signalrauschverhältnissen SNR. Bei dem erfindungsgemäßen Verfahren erfolgt die Detektion von Defekten mittels SAFT-Auswertung unabhängig von einer Defektorientierung des Defektes innerhalb des Prüfobjektes 2. Weiterhin können bei dem erfindungsgemäßen Verfahren größere Schallwandler bzw. Prüfköpfe 1 eingesetzt werden, die mehr Energie in das Prüfobjekt 2 bzw. das Bauteil 2 einbringen, wobei das Schallfeld gleichzeitig einen kleinen Öffnungswinkel aufweist. Für das erfindungsgemäße Verfahren sind Einzelprüfköpfe und Array-Prüfköpfe gleichermaßen geeignet. Das erfindungsgemäße Verfahren bietet zudem Flexibilität bei der Messung, da die Messdaten mit einem unterschiedlichen Messraster ermittelt werden können. Beispielsweise kann ein Messraster bei fokussierten Prüfköpfen, Gruppenstrahlern feiner gewählt bzw. eingestellt werden. Wenn die SAFT-Auswertungsergebnisse zu den einzelnen Messdatensätzen MDS separat gespeichert werden, können zudem bei der Beurteilung der Auswertungsergebnisse die Beiträge der verschiedenen Einschallwinkel $\alpha$ separat ein- und ausgeschaltet bzw. selektiert werden. Das erfindungsgemäße Verfahren bietet eine gegenüber herkömmlichen Verfahren bessere Bestimmung der Fehler- bzw. Defektorientierung, da bei dem erfindungsgemäßen Verfahren ermittelt werden kann, welche Einschallrichtung am stärksten zu dem jeweiligen Auswertungsergebnis beiträgt. Weiterhin bietet das erfindungsgemäße Verfahren die Möglichkeit zur Fusion von LW(Longitudinalwelle)-Prüfung und TW(Transversalwelle)-Prüfung. Das Ultraschallsignal kann bei dem erfindungsgemäßen Verfahren als Longitudinalwelle LW und/oder als Transversalwelle TW in das Prüfobjekt 2 eingeschallt werden.

Die berechneten Defektanzeigewerte $S_{RP}$ des Rekonstruktionsgitters RG werden durch die in Fig. 2 und 4 dargestellte Auswerteeinheit 4 zu der Anzeige 5 übertragen und dort in Schnittansichten zweidimensional oder dreidimensional dem Prüfer P angezeigt.

Bei einer möglichen Ausführungsform werden die berechneten Defektanzeigewerte $S_{RP}$ des untersuchten Prüfobjektes 2 durch die Auswerteeinheit 4 mit Sollwerten eines gespeicherten Modells des zu untersuchenden Prüfobjektes 2 zur Berechnung von Differenzwerten $\Delta S$ verglichen, wobei bei Überschreiten von vorgegebenen Toleranzschwellenwerten ein Defekt des Prüfobjektes 2 angegeben bzw. angezeigt wird. Bei einer möglichen Ausführungsform des erfindungsgemäßen Verfahrens wird ein als defekt erkanntes Prüfobjekt 2 anschließend automatisch aussortiert oder nachbearbeitet. Das erfindungsgemäße Verfahren eignet sich für beliebige Prüfobjekte 2, wie beispielsweise rotationssymmetrische Schmiedeteile, Rotorteile an einer Gasturbine, Zylinder und dergleichen. Das Prüfobjekt 2 kann weiterhin eine beliebige Form aufweisen, beispielsweise rund, zylinderförmig, aber auch eckig oder polygonal. Das erfindungsgemäße Verfahren berücksichtigt verschiedene Einschallwinkel $\alpha$ und ist gleichzeitig flexibel hinsichtlich des Messrasters. Bei dem erfindungsgemäßen Verfahren können zudem mehrere Scans in der Tiefe eines zu untersuchenden Prüfobjektes 2 durchgeführt werden.

**Patentansprüche**

1. Verfahren zur Detektion von mindestens einem Defekt innerhalb eines Prüfobjektes (2) mit den Schritten:

    (a) Ermitteln (S1) mehrerer Messdatensätze (MDS) des Prüfobjektes (2), wobei zur Ermittlung eines Messdatensatzes (MDS) jeweils ein Ultraschallsignal an verschiedenen Messpunkten (MP) in das Prüfobjekt (2) mit einem Einschallwinkel ($\alpha$) eingeschallt wird, welcher zur Ermittlung der Messdatensätze (MDS) für jeden Messdatensatz (MDS) verändert wird;
    (b) Durchführen einer SAFT (Synthetic Aperture Focussing Technique)-Auswertung für jeden ermittelten Messdatensatz (MDS) unter Verwendung eines gemeinsamen Rekonstruktionsgitters (RG) innerhalb des Prüfobjektes (2) zur Berechnung eines SAFT-Auswertungsergebnisses für jeden Messdatensatz (MDS); und
    (c) Überlagern der berechneten SAFT-Auswertungsergebnisse zur Berechnung eines orientierungsunabhängigen Defektanzeigewertes ($S_{RP}$) für jeden Rekonstruktionspunkt (RP) des Rekonstruktionsgitters (RG).

2. Verfahren nach Anspruch 1, wobei die berechneten SAFT-Auswertungsergebnisse der ermittelten Messdatensätze (MDS) zur Nivellierung des Amplitudenniveaus vor der Überlagerung der SAFT-Auswertungsergebnisse gewichtet werden.

3. Verfahren nach Anspruch 1 oder 2, wobei die überlagerten SAFT-Auswertungsergebnisse gleichgerichtet und durch Tiefpassfilterung geglättet werden.

4. Verfahren nach einem der vorangehenden Ansprüche 1 bis 3, wobei die Messpositionen (MP) in einem Messraster auf der Oberfläche des Prüfobjektes (2) liegen.

5. Verfahren nach einem der vorangehenden Ansprüche 1 bis 4, wobei vor dem Ermitteln der Messdatensätze (MDS) die Messpositionen (MP) mittels eines Justierreflektors anhand eines reflektierten Echosignales des Justierreflektors justiert werden.

6. Verfahren nach einem der vorangehenden Ansprüche 1 bis 5, wobei zur Ermittlung eines Messdatensatzes (MDS) des Prüfobjektes (2) ein Ultraschallsignal mittels eines Einzelschwingerprüfkopfes (1) oder mittels eines Gruppenstrahler-Prüfkopfes an verschiedenen Messpunkten (MP) in das Prüfobjekt (2) mit dem jeweils für die Ermittlung des Messdatensatzes (MDS) eingestellten Einschallwinkels ($\alpha$) eingeschallt wird, wobei die für die verschiedenen Messpunkte (MP) von dem Prüfobjekt (2) reflektierten analogen Echo-Ultraschallsignale verstärkt und anschließend zu Messpunkt-Echodaten digitalisiert werden, welche den Messdatensatz (MDS) des Prüfobjektes (2) bilden.

7. Verfahren nach Anspruch 6, wobei der Einzelschwingerprüfkopf oder der Gruppenstrahler-Prüfkopf (1) zum Einschallen der Ultraschallsignale und zum Erfassen der Echo-Ultraschallsignale kontinuierlich relativ zu der Oberfläche des Prüfobjektes (2) bewegt werden.

8. Verfahren nach einem der vorangehenden Ansprüche 1 bis 7, wobei die für die verschiedenen Einschallwinkel ($\alpha$) berechneten SAFT-Auswertungsergebnisse der verschiedenen Messdatensätze (MDS) separat zu dem Einschallwinkel ($\alpha$) zugehörig abgespeichert werden und für die Überlagerung anhand des Einschallwinkels ($\alpha$) selektiert werden.

9. Verfahren nach einem der vorangehenden Ansprüche 1 bis 8, wobei das Ultraschallsignal als Longitudinalwelle und/oder Transversalwelle in das Prüfobjekt (2) eingeschallt wird.

10. Verfahren nach einem der vorangehenden Ansprüche 1 bis 9, wobei die berechneten Defektanzeigewerte ($S_{RP}$) des Rekonstruktionsgitters (RG) in Schnittansichten zweidimensional oder dreidimensional auf einer Anzeige (5) einem Prüfer (P) angezeigt werden.

11. Verfahren nach einem der vorangehenden Ansprüche 1 bis 10, wobei die berechneten Defektanzeigewerte ($S_{RP}$) des untersuchten Prüfobjektes (2) jeweils mit Sollwerten eines gespeicherten Modells des zu untersuchenden Prüfobjektes (2) zur Berechnung von Differenzwerten ($\Delta S$) verglichen werden, die bei Überschreiten von vorgegebenen Toleranzschwellenwerten einen Defekt des Prüfobjektes (2) angeben.

12. Verfahren nach Anspruch 11, wobei ein als defekt erkanntes Prüfobjekt (2) automatisch aussortiert wird.

13. Vorrichtung zur Detektion von mindestens einem Defekt innerhalb eines Prüfobjektes (2) mit:

    mindestens einem Prüfkopf (1), mittels welchem ein Ultraschallsignal mit einem Einschallwinkel (α) zur Ermittlung mehrerer Messdatensätze (MDS) in das Prüfobjekt (2) einschallbar ist; wobei der Prüfkopf (1) kontinuierlich relativ zu einer Oberfläche des Prüfobjektes (2) zur Ermittlung der Messdatensätze (MDS) derart bewegbar ist, dass das Ultraschallsignal an verschiedenen Messpunkten (MP) in das Prüfobjekt einschallbar ist; wobei zur Ermittlung eines Messdatensatzes (MDS) jeweils das Ultraschallsignal in das Prüfobjekt (2) mit einem zugehörigen Einschallwinkel (α) einschallbar ist, welcher zur Ermittlung der Messdatensätze (MDS) für jeden Messdatensatz veränderbar ist; und mit einer Auswerteeinheit (4), welche zum Durchführen einer SAFT (Synthetic Aperture Focussing Technique)-Auswertung für jeden ermittelten Messdatensatz (MDS) unter Verwendung eines gemeinsamen Rekonstruktionsgitters (RG) innerhalb des Prüfobjektes (2) zur Berechnung eines SAFT-Auswertungsergebnisses für jeden Messdatensatz (MDS) ausgebildet ist, wobei die Auswerteeinheit (4) weiterhin dazu ausgebildet ist, die berechneten SAFT-Auswertungsergebnisse zur Berechnung eines orientierungsunabhängigen Defektanzeigewertes ($S_{RP}$) für jeden Rekonstruktionspunkt (RP) des gemeinsamen Rekonstruktionsgitters (RG) zu überlagern.

14. Vorrichtung nach Anspruch 13, wobei die Auswerteeinheit (4) dazu ausgebildet ist, die berechneten SAFT-Auswertungsergebnisse der ermittelten Messdatensätze (MDS) zur Nivellierung des Amplitudenniveaus vor der Überlagerung der SAFT-Auswertungsergebnisse zu gewichten.

**Claims**

1. Method for detecting at least one defect within a test object (2), comprising the steps:

    (a) determining (S1) a plurality of measurement data sets (MDS) of the test object (2), an ultrasound signal respectively being insonated at various measurement points (MP) into the test object (2) with an insonation angle (α) in order to determine a measurement data set (MDS), this insonation angle being varied for each measurement data set (MDS) for the determination of the measurement data sets (MDS);
    (b) carrying out a SAFT (Synthetic Aperture Focusing Technique) evaluation for each measurement data set (MDS) determined, by using a common reconstruction grid (RG) within the test object (2) for calculating an SAFT evaluation result for each measurement data set (MDS); and
    (c) superposing the calculated SAFT evaluation results, in order to calculate an orientation-independent defect display value ($S_{RP}$) for each reconstruction point (RP) of the reconstruction grid (RG).

2. Method according to Claim 1, wherein the calculated SAFT evaluation results of the measurement data sets (MDS) determined are weighted in order to level the amplitude level before the superposition of the SAFT evaluation results.

3. Method according to Claim 1 or 2, wherein the superposed SAFT evaluation results are rectified, and smoothed by lowpass filtering.

4. Method according to one of the preceding Claims 1 to 3, wherein the measurement positions (MP) lie in a measurement network on the surface of the test object (2).

5. Method according to one of the preceding Claims 1 to 4, wherein, before the determination of the measurement data sets (MDS), the measurement positions (MP) are adjusted by means of an adjustment reflector with the aid of a reflected echo signal of the adjustment reflector.

6. Method according to one of the preceding Claims 1 to 5, wherein, in order to determine a measurement data set (MDS) of the test object (2), an ultrasound signal is insonated by means of a single-oscillator test head (1) or by means of a group radiator test head at various measurement points (MP) into the test object (2) with the insonation angle (α) respectively set for the determination of the measurement data set (MDS), the analog echo ultrasound signals reflected by the test object (2) for the various measurement points (MP) being amplified and subsequently digitized to form measurement point echo data, which form the measurement data set (MDS) of the test object (2).

7. Method according to Claim 6, wherein the single-oscillator test head or the group radiator test head (1) for insonating the ultrasound signals and for recording the echo ultrasound signals is moved continuously relative to the surface of the test object (2).

8. Method according to one of the preceding Claims 1 to 7, wherein the SAFT evaluation results, calculated for the various insonation angles (α), of the various measurement data sets (MDS) for the associated insonation angle (α) are stored separately and are selected for the superposition with the aid of the insonation angle (α).

9. Method according to one of the preceding Claims 1 to 8, wherein the ultrasound signal is insonated into the test object (2) as a longitudinal wave and/or transverse wave.

10. Method according to one of the preceding Claims 1 to 9, wherein the calculated defect display values ($S_{RP}$) of the reconstruction grid (RG) are displayed to a tester (P) twodimensionally in sectional views or three-dimensionally on a display (5).

11. Method according to one of the preceding Claims 1 to 10, wherein the calculated defect display values ($S_{RP}$) of the examined test object (2) are respectively compared with setpoint values of a stored model of the test object (2) to be examined, in order to calculate difference values ($\Delta S$) which indicate a defect of the test object (2) when predetermined tolerance threshold values are exceeded.

12. Method according to Claim 11, wherein a test object (2) identified as defective is automatically rejected.

13. Device for detecting at least one defect within a test object (2), comprising:

    at least one test head (1) by means of which an ultrasound signal can be insonated into the test object (2) with an insonation angle ($\alpha$) in order to determine a plurality of measurement data sets (MDS);
    wherein the test head (1) can be moved continuously relative to a surface of the test object (2) in order to determine the measurement data sets (MDS) such that the ultrasound signal can be insonated at various measurement points (MP) into the test object;
    wherein in order to determine a measurement data set (MDS), the ultrasound signal can be respectively insonated with an associated insonation angle ($\alpha$) into the test object (2), which can be varied for each measurement data set for the determination of the measurement data sets (MDS);
    and comprising an evaluation unit (4) which is designed to carry out an SAFT (Synthetic Aperture Focusing Technique) evaluation for each measurement data set (MDS) determined, by using a common reconstruction grid (RG) within the test object (2) for calculating an SAFT evaluation result for each measurement data set (MDS), the evaluation unit (4) furthermore being designed to superpose the calculated SAFT evaluation results, in order to calculate an orientation-independent defect display value ($S_{RP}$) for each reconstruction point (RP) of the common reconstruction grid (RG).

14. Device according to Claim 13, wherein the evaluation unit (4) is designed to weight the calculated SAFT evaluation results of the measurement data sets (MDS) determined, in order to level the amplitude level before the superposition of the SAFT evaluation results.

**Revendications**

1. Procédé de détection d'au moins un défaut au sein d'un objet (2) à contrôler, ayant les stades :

    (a) détermination (S1) de plusieurs jeux (MDS) de données de mesure de l'objet (2) à contrôler, dans lequel, pour déterminer un jeu (MDS) de données de mesure, on envoie un signal d'ultrasons en divers points (MP) de mesure de l'objet (2) à contrôler avec un angle ($\alpha$) d'incidence, qui, pour déterminer les jeux (MDS) de données de mesure, varie pour chaque jeu (MDS) de données de mesure ;
    (b) on effectue une exploitation SAFT (Synthetic Aperture Focussing Technique) pour chaque jeu (MDS) de données de mesure déterminé, en utilisant une grille (RG) de reconstruction commune au sein de l'objet (2) à contrôler, pour le calcul d'un résultat d'exploitation SAFT pour chaque jeu (MDS) de données de mesure et
    (c) on superpose les résultats d'exploitation SAFT calculés, pour calculer une valeur ($S_{RP}$) d'indication de défaut indépendante de l'orientation pour chaque point (RP) de reconstruction de la grille (RG) de reconstruction.

2. Procédé suivant la revendication 1, dans lequel on pondère des résultats d'exploitation SAFT calculés, des jeux (MDS) de données de mesure déterminés, pour niveler le niveau d'amplitude avant la superposition des résultats d'exploitation SAFT.

3. Procédé suivant la revendication 1 ou 2, dans lequel on redresse les résultats d'exploitation SAFT superposés et on les lisse par filtrage passe-bas.

4. Procédé suivant l'une des revendications précédentes 1 à 3, dans lequel les positions (MP) de mesure se trouvent dans une trame de mesure à la surface de l'objet (2) à contrôler.

5. Procédé suivant l'une des revendications précédentes 1 à 4, dans lequel, avant de déterminer les jeux (MDS) de données de mesure, on règle les positions (MP) de mesure au moyen d'un réflecteur de réglage, à l'aide d'un signal d'écho réfléchi du réflecteur de réglage.

**6.** Procédé suivant l'une des revendications précédentes 1 à 5, dans lequel, pour déterminer un jeu (MDS) de données de mesure de l'objet (2) à contrôler, on envoie un signal d'ultrasons au moyen d'une tête (1) de contrôle à excitateur individuel, ou au moyen d'une tête de contrôle à rayonnement de groupe, en divers points (MP) de mesure de l'objet (2) à traiter, ayant respectivement l'angle ($\alpha$) d'incidence établi pour la détermination du jeu (MDS) de données de mesure,
dans lequel on amplifie les signaux d'ultrasons d'écho analogiques réfléchis par l'objet (2) à contrôler pour les divers points (MP) de mesure et, ensuite, on les numérise en des données d'écho de point de mesure, qui forment le jeu (MDS) de données de mesure de l'objet (2) à contrôler.

**7.** Procédé suivant la revendication 6,
dans lequel on déplace continuellement, par rapport à la surface de l'objet (2) à traiter, la tête de contrôle à excitation individuelle ou la tête (1) de contrôle à rayonnement de groupe, pour envoyer les signaux d'ultrasons et pour détecter les signaux d'ultrasons d'écho.

**8.** Procédé suivant l'une des revendications précédentes 1 à 7, dans lequel on mémorise, de manière associée séparément à l'angle ($\alpha$) d'incidence, les résultats d'exploitation SAFT, calculés pour les divers angles ($\alpha$) d'incidence, des divers jeux (MDS) de données de mesure et pour la superposition, on les sélectionne à l'aide de l'angle ($\alpha$) d'incidence.

**9.** Procédé suivant l'une des revendications précédentes 1 à 8, dans lequel on envoie le signal d'ultrasons sous la forme d'une onde longitudinale et/ou d'une onde transversale dans l'objet (2) à contrôler.

**10.** Procédé suivant l'une des revendications précédentes 1 à 9, dans lequel on affiche les valeurs ($S_{RP}$) d'affichage de défaut calculées de la grille (RG) de reconstruction, en des vues en coupe en deux dimensions ou en trois dimensions, sur un affichage (5) d'un contrôleur (P).

**11.** Procédé suivant l'une des revendications précédentes 1 à 10,
dans lequel on compare les valeurs ($S_{RP}$) d'affichage de défaut calculées de l'objet (2) à contrôler étudié, respectivement des valeurs de consigne d'un modèle mémorisé de l'objet (2) à contrôler étudié, pour calculer des valeurs ($\Delta S$) de différence, qui indiquent, si des valeurs de seuil de tolérance données à l'avance sont dépassées, un défaut de l'objet (2) à contrôler.

**12.** Procédé suivant la revendication 11,
dans lequel on rejette automatiquement un objet (2) à contrôler reconnu défectueux.

**13.** Procédé de détection d'au moins un défaut au sein d'un objet (2) à contrôler comprenant :

au moins une tête (1) de contrôle au moyen de laquelle un signal d'ultrasons peut être envoyé, avec un angle ($\alpha$) d'incidence, dans l'objet (2) à contrôler, pour déterminer plusieurs jeux (MDS) de données de mesure ;
dans lequel la tête (1) de contrôle peut être déplacée continuellement par rapport à une surface de l'objet (2) à contrôler, pour déterminer les jeux (MDS) de données de mesure, de manière à pouvoir envoyer le signal d'ultrasons dans l'objet à contrôler, en divers points (MP) de mesure ;
dans lequel, pour déterminer un jeu (MDS) de données de mesure, le signal d'ultrasons peut être envoyé respectivement dans l'objet (2) à contrôler avec un angle ($\alpha$) d'incidence propre, qui peut être modifié pour déterminer les jeux (MDS) de données de mesure pour chaque jeu de données de mesure
et par une unité (4) d'exploitation, qui, pour effectuer une exploitation SAFT (Synthetic Aperture Focussing Technique), pour chaque jeu (MDS) de données de mesure déterminé, en utilisant une grille (RG) de reconstruction commune au sein de l'objet (2) à contrôler, est constituée pour le calcul d'un résultat d'exploitation SAFT pour chaque jeu (MDS) de données de mesure, l'unité (4) d'exploitation étant constituée en outre pour superposer les résultats d'exploitation SAFT calculés, pour le calcul d'une valeur ($S_{RP}$) d'affichage de défaut, indépendante de l'orientation, pour chaque point (RP) de reconstruction de la grille (RG) de reconstruction commune.

**14.** Dispositif suivant la revendication 13,
dans lequel l'unité (4) d'exploitation est constituée pour pondérer, avant la superposition des résultats d'exploitation SAFT, les résultats d'exploitation SAFT calculés des jeux (MDS) de données de mesure déterminés afin de niveler le niveau d'amplitude.

## FIG 1

Pk

1

90°

α

β

## FIG 2

4

5

P

3

Pk

1

2

MP_N

MP_0

MP_1

MP_2

MP_3

P0

FIG 3

# FIG 4

EP 2 764 356 B1

# FIG 5

| | |
|---|---|
| | S1 |
| | S2 |
| | S3 |

# FIG 6

MDS

| | MP (1, 1) ... MP (N1, 1) | SAFT (MDS$_1$) |
|---|---|---|
| $\alpha_1$ | MP (1, 1) ... MP (N1, 1) | SAFT (MDS$_1$) |
| $\alpha_2$ | MP (1, 2) ... MP (N2, 2) | SAFT (MDS$_2$) |
| $\alpha_3$ | MP (1, 3) ... MP (N3, 3) | SAFT (MDS$_3$) |
| $\vdots$ | $\vdots$ | |
| $\alpha_M$ | MP (1, M) ... MP (MN, M) | SAFT (MDS$_M$) |

$$S_{RP} = \sum_{i=1}^{M} 9_i \, \text{SAFT} \, (\text{MDS}_i)$$

**IN DER BESCHREIBUNG AUFGEFÜHRTE DOKUMENTE**

**In der Beschreibung aufgeführte Patentdokumente**

- EP 2120045 A1
- DE 102008023862 A1